# FASCICULE DE BREVET EUROPEEN

(11) **EP 1 966 537 B1**
(45) Date de publication et mention de la délivrance du brevet: **27.02.2019**
(21) Numéro de dépôt: 06847161.4
(22) Date de dépôt: 18.12.2006
(51) Int. Cl.: F23D 14/32, F23D 14/22, C03B 5/235, F23D 14/66

(54) **PROCÉDÉ D'OXYCOMBUSTION ÉTAGÉE METTANT EN OEUVRE DES RÉACTIFS PRÉCHAUFFÉS**
STUFEN-OXY-KRAFTSTOFF-VERBRENNUNGSVERFAHREN MIT VORGEWÄRMTEN REAGENZIEN
STAGED OXYFUEL COMBUSTION METHOD USING PRE-HEATED REAGENTS

(30) Priorité: 22.12.2005 FR 0554032
(43) Date de publication de la demande: 10.09.2008
(73) Titulaire: L'Air Liquide Société Anonyme pour l'Etude et l'Exploitation des Procédés Georges Claude, 75007 Paris (FR)
(72) Inventeur: LEROUX, Bertrand, F-92130 Linas (FR); CONSTANTIN, Gabriel, F-91600 Savigny S/orge (FR); IMBERNON, Christian, F-94230 Thiais (FR); TSIAVA, Rémi, F-91250 St Germain Les Corbeil (FR)
(74) Mandataire: De Vleeschauwer, Natalie Y.L.D.
(86) Numéro de dépôt international: PCT/FR2006/051371
(87) Numéro de publication internationale: WO 2007/074278

(56) Documents cités:
- EP-A- 0 762 050
- EP-A- 0 872 690
- FR-A- 2 863 690
- US-A- 6 074 197
- US-B1- 6 193 173

## Description

La présente invention concerne un procédé de combustion d'un combustible à l'aide d'un gaz oxygéné riche en oxygène dans lequel le gaz oxygéné riche en oxygène est préchauffé à une température d'au moins 300°C.

De nos jours, les deux principales préoccupations pour le dimensionnement des brûleurs destinés aux fours industriels sont l'efficacité du transfert de chaleur à la charge et la réduction des émissions polluantes en particulier les oxydes d'azote. Une des méthodes les plus prometteuses pour répondre à ces deux préoccupations est l'oxycombustion étagée utilisant des réactifs préchauffés. En effet, il est connu que l'étagement de la combustion permet de réduire les émissions de NOₓ et que le préchauffage des réactifs permet de réaliser des gains d'énergie.

L'oxycombustion est une combustion mettant en oeuvre un gaz oxygéné de concentration en oxygène supérieure à l'air. Le procédé de combustion étagée des combustibles consiste à diviser la quantité d'oxydant nécessaire à la combustion totale du combustible en au moins deux flux d'oxydant introduits à différentes distances du flux de combustible. Ainsi, un premier flux d'oxydant est introduit à très proche distance du flux de combustible. Ce premier flux d'oxydant le plus proche du flux de combustible est dénommé le flux primaire ; il permet la combustion partielle du combustible à une température contrôlée qui limite la formation des NOₓ. Les autres flux d'oxydant sont introduits à plus grande distance du combustible que le flux d'oxydant primaire ; ils permettent d'achever la combustion du combustible n'ayant pas réagi avec l'oxydant primaire. Ces flux sont dénommés flux secondaires.

Le préchauffage des réactifs (gaz oxygéné et combustible) a déjà été proposé dans différents schémas de récupération de la chaleur des fumées (US 6,071,116). On a également décrit dans WO 0079182 un brûleur avec injection de combustible et d'oxydant préchauffés. Toutefois, ces documents n'évoquent pas l'existence de problèmes liés à l'utilisation des réactifs chauds. Pourtant, l'utilisation de réactifs chauds peut conduire aux désagréments suivants :
- augmentation de la vitesse de flamme du mélange des réactifs. Le front de flamme se stabilise alors près des sorties des différents orifices des brûleurs accentuant les risques d'échauffement et de destruction prématurée des injecteurs.
- augmentation de la température de la flamme ce qui augmente le transfert radiatif à la charge et à la surface du brûleur,
- augmentation des niveaux de NOX thermique suite à l'augmentation de la température de flamme.

Un procédé selon le préambule de la revendication 1 est décrit par le document US6074197.

Le but de la présente invention est de proposer des règles de dimensionnement pour un brûleur mettant en oeuvre une oxycombustion étagée et des réactifs préchauffés afin de conserver les avantages de l'oxycombustion étagée sans subir les risques liés à l'utilisation de réactifs préchauffés.

Dans ce but, l'invention concerne un procédé de combustion d'un combustible à l'aide d'un gaz oxygéné riche en oxygène, dans lequel on injecte dans une chambre de combustion :
- un jet du combustible, et
- au moins deux jets du gaz oxygéné :
   . le premier jet du gaz oxygéné, dit primaire, étant introduit par un orifice de diamètre D et étant injecté autour du jet de combustible et en quantité telle à engendrer une première combustion incomplète, les gaz issus de cette première combustion comportant encore au moins une partie du combustible,
   . et le deuxième jet du gaz oxygéné, étant introduit par un orifice de diamètre d, placé à une distance I de l'orifice d'introduction du premier jet de gaz oxygéné primaire de manière à entrer en combustion avec la partie du combustible présent dans les gaz issus de la première combustion,
et dans lequel :
- le jet du combustible débouche au sein du jet de gaz oxygéné primaire en un point en retrait de la paroi de la chambre de combustion, ledit point étant situé à une distance r,
- le gaz oxygéné riche en oxygène est préchauffé à une température d'au moins 300 C,
- le rapport r/D est compris :
   entre 5 et 20, de préférence entre 7 et 15,
- et le rapport I/d est d'au moins 2, de préférence d'au moins 10.

Le procédé selon l'invention met en oeuvre une combustion dans laquelle le comburant est un gaz oxygéné riche en oxygène, c'est-à-dire présentant une concentration en oxygène plus élevée que l'air : il peut s'agir d'air enrichi en oxygène ou d'oxygène pur. De préférence, la concentration en oxygène de ce gaz oxygéné est d'au moins 70 % en volume.

Le procédé selon l'invention met en oeuvre une combustion dans laquelle au moins le gaz oxygéné est préchauffé à une température d'au moins 300 C. Ce préchauffage peut se faire par toute méthode connue de l'art antérieur. De préférence, il s'agit d'un préchauffage par récupérateur permettant de récupérer la chaleur des fumées de combustion. Le combustible peut être également préchauffé, de préférence à au moins 300°C.

Le procédé selon l'invention met en oeuvre une combustion étagée dans laquelle le gaz oxygéné est divisé en deux flux qui sont introduits dans la chambre de combustion à différentes distances du jet de combustible. Le jet primaire est introduit au contact du jet de combustible et l'entoure. L'orifice de l'injecteur introduisant le jet primaire dans la chambre de combustion est de diamètre D. L'extrémité de cet injecteur de jet primaire débouche directement dans la chambre de combustion. Par contre, l'extrémité de l'injecteur de combustible ne débouche pas directement dans la chambre de combustion, mais est situé en retrait de la paroi de la chambre de combustion : l'extrémité de l'injecteur de combustible débouche au milieu de l'injecteur de jet primaire en un point en retrait de la paroi de la chambre de combustion, situé à une distance r de ladite paroi. Le diamètre de l'injecteur de combustible est généralement ajusté de manière à produire une flamme stable. Généralement, on introduit 2 à 20 % de la quantité totale en gaz oxygéné nécessaire à la combustion du combustible au moyen du jet primaire. Le complément de gaz oxygéné est introduit au moyen du jet secondaire par un injecteur dont l'extrémité débouche directement dans la chambre de combustion et dont l'orifice présente un diamètre d. Cet injecteur du jet secondaire est placé à une distance I de l'orifice de gaz oxygéné primaire, la distance I étant mesurée entre les bords les plus proches des orifices de l'injecteur de gaz oxygéné primaire et de l'injecteur de gaz oxygéné secondaire.

Une des caractéristiques essentielles de l'invention est qu'il faut éviter de mettre en oeuvre le procédé d'oxycombustion étagée avec retrait de l'injecteur de combustible au sein de l'injecteur de gaz oxygéné primaire avec un dimensionnement tel que r/D soit compris entre 3 et 5. Les dimensionnements respectifs de r et D sont critiques car ils influencent le volume de la cavité créée par le retrait de l'injecteur de combustible au sein de l'injecteur de gaz oxygéné primaire. Par le choix du bon dimensionnement, l'invention permet, d'une part, d'éviter que la flamme de prémélange se développant dans cette cavité endommage les extrémités des injecteurs de combustible et de gaz oxygéné primaire et, d'autre part, d'éviter que le rayonnement provenant de la chambre de combustion endommage l'extrémité de l'injecteur de combustible.

Une autre caractéristique essentielle de l'invention est que le rapport I/d doit être d'au moins 2, de préférence d'au moins 10.

Habituellement, les orifices par lesquels sont injectés les réactifs présentent une section circulaire. Toutefois, l'invention couvre également les cas où les sections de ces orifices ne sont pas de forme circulaire ; dans ces derniers cas, les diamètres d et D évoqués ci-dessus correspondent aux diamètres hydrauliques des sections non circulaires, le diamètre hydraulique étant défini comme le rapport de 4 fois la surface de la section de l'orifice divisé par le périmètre de la section de l'orifice.

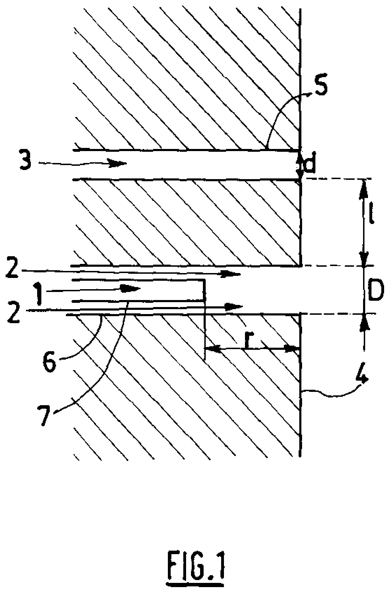

La figure 1 est un schéma permettant d'illustrer les différents éléments de dimensionnement du procédé selon l'invention (r, d, D, I). Le combustible 1 est introduit au moyen de l'injecteur 7 placé dans l'injecteur 6 du gaz oxygéné primaire 2. L'extrémité de l'injecteur de combustible est située à une distance r en retrait de la paroi 4 de la chambre de combustion. L'extrémité de l'injecteur du gaz oxygéné primaire 2 présente un diamètre D. Le gaz oxygéné secondaire 3 est introduit par l'injecteur 5 dont l'extrémité présente un diamètre d. La distance entre les bords des extrémités des injecteurs 5 et 6 de gaz oxygéné est I.

Par mise en oeuvre du procédé tel que précédemment décrit, il est possible de mettre en oeuvre le préchauffage des réactifs de combustion dans un procédé d'oxycombustion étagée sans endommager prématurément les injecteurs de réactifs et sans augmenter l'émission de NOₓ.

## Revendications

1. Procédé de combustion d'un combustible à l'aide d'un gaz oxygéné riche en oxygène, dans lequel on injecte dans une chambre de combustion :
- un jet du combustible, et
- au moins deux jets du gaz oxygéné :
. le premier jet du gaz oxygéné, dit primaire, étant introduit par un orifice de diamètre D et étant injecté autour du jet de combustible et en quantité telle qu'il engendre une première combustion incomplète, les gaz issus de cette première combustion comportant encore au moins une partie du combustible,
. et le deuxième jet du gaz oxygéné, étant introduit par un orifice de diamètre d, placé à une distance I de l'orifice d'introduction du premier jet de gaz oxygéné primaire de manière à entrer en combustion avec la partie du combustible présent dans les gaz issus de la première combustion,
les diamètres D et d étant défini comme le rapport de 4 fois la surface de la section de l'orifice divisé par le périmètre de la section de l'orifice,
et dans lequel :
- le jet du combustible débouche au sein du jet de gaz oxygéné primaire en un point en retrait de la paroi de la chambre de combustion, ledit point étant situé à une distance r,
- le gaz oxygéné riche en oxygène est préchauffé à une température d'au moins 300°C, **caractérisé en ce que** :
- le rapport r/D est compris :
. entre 5 et 20,
- et le rapport l/d est d'au moins 2.

2. Procédé selon la revendication précédente, **caractérisé en ce que** le rapport r/D est compris entre 7 et 15.

3. Procédé selon la revendication 1 ou 2, **caractérisé en ce que** le rapport l/d est d'au moins 10.

4. Procédé selon l'une des revendications précédentes, **caractérisé en ce que** le gaz oxygéné riche en oxygène présente une concentration en oxygène d'au moins 70 % en volume.

5. Procédé selon l'une des revendications précédentes, **caractérisé en ce que** le combustible est préchauffé à au moins 300°C.

6. Procédé selon l'une des revendications précédentes, **caractérisé en ce qu'**il est mis en oeuvre dans un four à fusion de verre.

7. Procédé selon l'une des revendications 1 à 5, **caractérisé en ce qu'**il est mis en oeuvre dans un four de réchauffage.

## Patentansprüche

1. Verfahren zur Verbrennung eines Brennstoffs mit Hilfe eines sauerstoffreichen sauerstoffhaltigen Gases, wobei in eine Verbrennungskammer injiziert wird:
- ein Strahl des Brennstoffs, und
- mindestens zwei Strahle des sauerstoffhaltigen Gases:
. wobei der erste Strahl des sauerstoffhaltigen Gases, bezeichnet als primär, durch eine Öffnung mit einem Durchmesser D eingeführt wird und um den Strahl von Brennstoff und in einer derartigen Menge injiziert wird, dass er eine erste unvollständige Verbrennung verursacht, wobei die Gase, die aus dieser ersten Verbrennung stammen, noch mindestens einen Teil des Brennstoffs beinhalten,
. und wobei der zweite Strahl des sauerstoffhaltigen Gases durch eine Öffnung mit einem Durchmesser d eingeführt wird, die in einem Abstand I von der Öffnung zur Einführung des ersten primären Strahls von sauerstoffhaltigem Gas platziert ist, um mit dem Brennstoffteil, der in den Gasen vorhanden ist, die aus der ersten Verbrennung stammen, in Verbrennung zu treten,
wobei die Durchmesser D und d als Verhältnis von 4 Mal die Querschnitts der Öffnung, geteilt durch den Umfang des Öffnungsquerschnitts, definiert sind,
und wobei:
- der Strahl des Brennstoffs im Inneren des Strahls von primärem sauerstoffhaltigem Gas an einem zurückgezogenen Punkt der der Wand Verbrennungskammer mündet, wobei sich der Punkt in einem Abstand r befindet,
- das sauerstoffreiche sauerstoffhaltige Gas auf eine Temperatur von mindestens 300 ºC vorerhitzt wird, **dadurch gekennzeichnet, dass**:
- das Verhältnis r/D umfasst ist:
. zwischen 5 und 20,
- und das Verhältnis l/d mindestens 2 ist.

2. Verfahren nach dem vorstehenden Anspruch, **dadurch gekennzeichnet, dass** das Verhältnis r/D zwischen 7 und 15 liegt.

3. Verfahren nach Anspruch 1 oder 2, **dadurch gekennzeichnet, dass** das Verhältnis I/d mindestens 10 ist.

4. Verfahren nach einem der vorstehenden Ansprüche, **dadurch gekennzeichnet, dass** das sauerstoffreiche sauerstoffhaltige Gas eine Sauerstoffkonzentration von mindestens 70 Vol% aufweist.

5. Verfahren nach einem der vorstehenden Ansprüche, **dadurch gekennzeichnet, dass** der Brennstoff auf mindestens 300 °C vorerhitzt wird.

6. Verfahren nach einem der vorstehenden Ansprüche, **dadurch gekennzeichnet, dass** es in einem Glasschmelzofen durchgeführt wird.

7. Verfahren nach einem der Ansprüche 1 bis 5, **dadurch gekennzeichnet, dass** es in einem Aufheizofen durchgeführt wird.

## Claims

1. Method of combustion for a fuel using an oxygen gas rich in oxygen, wherein a combustion chamber is injected with:
- a jet of fuel, and
- at least two jets of oxygen gas:
• the first jet of oxygen gas, referred to as primary, being introduced via an orifice of diameter D and being injected around the jet of fuel and in a quantity such that it generates a first incomplete combustion, the gases coming from this first combustion also comprising at least one portion of the fuel,
• and the second jet of oxygen gas, being introduced via an orifice of diameter d, positioned at a distance I from the orifice for introducing the first primary oxygen gas so as to enter into combustion with the portion of the fuel present in the gases coming from the first combustion,
the diameters D and d being defined as the ratio of 4 times the surface area of the section of the orifice divided by the perimeter of the cross-section of the orifice,
and wherein:
- the jet of fuel leads to the jet of primary oxygen gas at a point set back from the wall of the combustion chamber, said point being located at a distance r,
- the oxygen gas rich in oxygen is preheated to a temperature of at least 300 °C, **characterised in that**:
- the r/D ratio is:
• between 5 and 20,
- and the I/d ratio is at least 2.

2. Method according to the preceding claim, **characterised in that** the r/D ratio is between 7 and 15.

3. Method according to claim 1 or 2, **characterised in that** the ratio I/d ratio is at least 10.

4. Method according to one of the preceding claims, **characterised in that** the oxygen gas rich in oxygen has a concentration in oxygen of at least 70 % by volume.

5. Method according to one of the preceding claims, **characterised in that** the fuel is preheated to at least 300 °C.

6. Method according to one of the preceding claims, **characterised in that** it is implemented in a glass melting furnace.

7. Method according to one of claims 1 to 5, **characterised in that** it is implemented in a reheating furnace.
